(19) Europäisches Patentamt
European Patent Office
Office européen des brevets

(11) Veröffentlichungsnummer: **0 035 000**
**B1**

(12) # EUROPÄISCHE PATENTSCHRIFT

(45) Veröffentlichungstag der Patentschrift: **05.12.84**

(51) Int. Cl.³: **C 09 B 67/24,** C 09 B 29/085, D 06 P 1/06

(21) Anmeldenummer: **81810053.9**

(22) Anmeldetag: **20.02.81**

(54) **Farbstoffpräparate, deren Herstellung und Verwendung.**

(30) Priorität: **26.02.80 CH 1520/80**

(43) Veröffentlichungstag der Anmeldung:
**02.09.81 Patentblatt 81/35**

(45) Bekanntmachung des Hinweises auf die Patenterteilung:
**05.12.84 Patentblatt 84/49**

(84) Benannte Vertragsstaaten:
**CH DE FR GB LI**

(56) Entgegenhaltungen:
**DE - A - 2 616 639**
**DE - A - 2 657 994**
**FR - A - 2 095 903**
**FR - A - 2 240 939**
**FR - A - 2 373 591**
**US - A - 2 955 011**

(73) Patentinhaber: **CIBA-GEIGY AG, Postfach, CH-4002 Basel (CH)**

(72) Erfinder: **Agarwal, Suresh C., Dr., Falkenstrasse 10, CH-4103 Bottmingen (CH)**

**EP 0 035 000 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, dass eine Vielzahl von wasserlöslichen Farbstoffen in Wasser eine Lösung ergibt, die beim Abkühlen auf Raumtemperatur zum Gelieren neigt. Dadurch wird vor allem die Herstellung von konzentrierten Foulard-Klotzflotten oder Druckpasten für moderne Kontinue-Färbeprozesse erschwert.

Zur Verhinderung dieser Gelbildung wird gemäss der US-PS 2 955 011 vorgeschlagen, Direktfarbstoffen Polyvinylpyrrolidon zuzusetzen, und gemäss der DOS 2 341 292 werden wasserlösliche Farbstoffe mit Polyvinylalkohol coupiert.

Gemäss der DAS 2 657 994 verwendet man zur Herstellung nicht gelierender Klotzflotten Farbstoffpräparate, welche einen sauren Farbstoff und ein Polyäthylenoxid, z.B. ein Polyäthylenglykol mit einem Molekulargewicht zwischen 2000 und 22 000, enthalten.

Ferner sind aus der französischen Patentanmeldung 2 095 903 kaltwasserlösliche Farbstoffpräparate bekannt, die neben einem metallfreien oder metallhaltigen Textil- bzw. Lederfarbstoff einer Primärteilchengrösse von $\leq 20$ µm ein anionisches, kationisches oder nichtionisches Dispergiermittel enthalten. Als nicht-ionische Dispergiermittel sind u.a. Fettalkohol- und Alkylphenol-äthoxylate, sowie Propylenoxid/Äthylenoxid-Blockpolymerisate genannt.

Es zeigte sich jedoch, dass diese bekannten Massnahmen nicht bei allen wasserlöslichen Farbstoffen ausreichen, um nicht gelierende Klotzflotten oder Druckpasten herstellen zu können.

Der vorliegenden Erfindung lag die Aufgabe zugrunde, für die Farbstoffe der nachstehend aufgeführten Formel, welche in besonderem Masse zum Gelieren neigen, Präparate bereitzustellen, bei denen dieser Nachteil nicht auftritt.

Diese Aufgabe wird gelöst durch die erfindungsgemässen Farbstoffpräparate, welche ausser dem Farbstoff und Polyäthylenglykol noch ein anionisches Dispergiermittel und zwar ein Kondensationsprodukt von aromatischen Sulfonsäuren mit Formaldehyd und/oder ein Ligninsulfonat, sowie gegebenenfalls einen wasserlöslichen Celluloseäther und weitere Zusätze enthalten.

Gegenstand der vorliegenden Erfindung sind somit Farbstoffpräparate, enthaltend

a) 30–70 Gew.% eines Farbstoffes der Formel

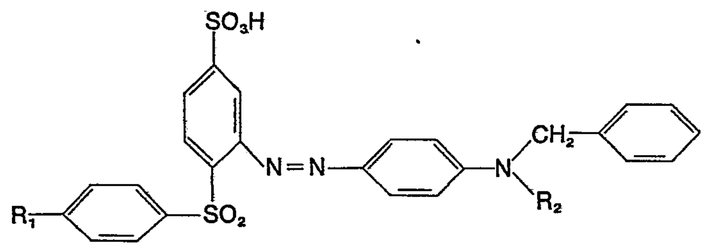

(I)

worin $R_1$ und $R_2$ unabhängig voneinander je einen Alkylrest mit 1–4 C-Atomen bedeuten,

b) 10–40 Gew.% Polyäthylenglykol,

c) 10–40 Gew.% eines Kondensationsprodukts von aromatischen Sulfonsäuren mit Formaldehyd und/oder eines Ligninsulfonats als anionisches Dispergiermittel, sowie gegebenenfalls

d) einen wasserlöslichen Celluloseäther und/oder

e) weitere Zusätze.

Unter diesen Präparaten sind diejenigen bevorzugt, welche

a) 30–70 Gew.% eines Farbstoffes der Formel (I),

b) 10–40 Gew.% Polyäthylenglykol,

c) 10–40 Gew.% eines Kondensationsprodukts von aromatischen Sulfonsäuren mit Formaldehyd und/oder eines Ligninsulfonats als anionisches Dispergiermittel,

d) 0,05–2 Gew.% eines wasserlöslichen Celluloseäthers sowie gegebenenfalls

e) weitere Zusätze enthalten.

Vorzugsweise enthalten die Präparate einen Farbstoff der obengenannten Formel, worin $R_1$ Methyl und $R_2$ Äthyl ist. Als Polyäthylenglykol kommen die im Handel erhältlichen Substanzen in Frage. Vorzugsweise verwendet man ein Polyäthylenglykol mit einem durchschnittlichen Molekulargewicht zwischen ca. 8000 und 12 000, insbesondere zwischen 8500 und 10 500.

Die wasserlöslichen Celluloseäther müssen in heissem Wasser gut löslich sein und auch in kaltem Wasser in den angewandten Mengen in Lösung bleiben. Bevorzugte Verbindungen sind Hydroxypropylcellulose oder vorzugsweise Hydroxypropyl-Methylcellulose.

Daneben können die Präparate noch weitere Zusätze, wie übliche Coupagemittel, z.B. Dextrin, Harnstoff oder anorganische Salze, wie Natriumchlorid oder Natriumsulfat, sowie Netzmittel, wie Nonylphenoldiglykoläthersulfat oder Dodecylbenzolsulfonat, und/oder Entstäubungsmittel enthalten.

Mie einigen der im Handel erhältlichen Ligninsulfonate (z.B. Cellex) erhält man auch ohne Verwendung von Celluloseäthern Präparate, deren wässrige Lösungen während ca. 1–3 Tagen nicht zum Gelieren neigen. Der Zusatz von Celluloseäthern ist jedoch in jedem Falle zu empfehlen, wenn die mit den Präparaten hergestellten Klotzflotten oder Druckpasten länger aufbewahrt werden sollen.

Bevorzugte Präparate enthalten 30–70, vorzugsweise 40–60 Gew.% Farbstoff, 10–40, vorzugsweise 15–30 Gew.% Polyäthylenglykol, 10–40, vorzugsweise 15–35 Gew.% der genannten anionischen Dispergiermittel, 0,05–2, vorzugsweise 0,1–1 Gew.% eines wasserlöslichen Celluloseäthers sowie gegebenenfalls weitere Zusätze. Unter diesen sind diejenigen besonders geeignet, welche 40–60 Gew.% eines Farbstoffes der Formel I, worin $R_1$ Methyl und $R_2$ Äthyl bedeutet, 15–30 Gew.% Polyäthylenglykol mit einem Molekulargewicht zwischen ca. 8500 und 10 500, 15–35 Gew.% Ligninsulfonat, 0,1–1 Gew.% Hydroxypropyl-Methyl-cellulose sowie Netz- und Entstäubungsmittel enthalten.

Die neuen Farbstoffpräparate können in Form fester Präparate, beispielsweise Pulver oder Granulat, oder in flüssiger Handelsform, wie z.B. einer Lösung in Wasser oder wasserlöslichen organischen Lösungsmitteln oder einer Mischung von Wasser und wasserlöslichen organischen Lösungsmittel vorliegen. Die festen Präparate sind bevorzugt.

Geeignete wasserlösliche organische Lösungsmittel sind beispielsweise mehrwertige Alkohole, wie Äthylenglykol oder Propylenglykol, Polyglykole, wie Di- oder Triäthylenglykol, Glykol- und Polyglykoläther, wie Äthylenglykol-, Propylenglykol- oder Diäthylenglykolmonoäthyläther; Carbonsäureamide, wie Formamid oder Dimethylformamid; Nitrile, wie Acetonitril oder β-Oxypropionitril; Alkanolamine, wie Äthanolamin; ferner N-Methylpyrrolidon; Butyrolacton, Dioxan; Tetrahydrofurfurylalkohol; Sulfolan; Dimethylsulfoxid oder Pyridin.

Die festen Präparate werden z.B. hergestellt, indem man einen Farbstoff der Formel I

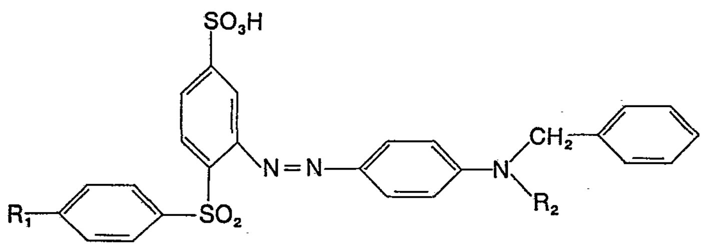

(I)

worin $R_1$ und $R_2$ unabhängig voneinander je einen Alkylrest mit 1–4 C-Atomen bedeuten, zusammen mit einem Polyäthylenglykol, einem der genannten anionischen Dispergiermittel und ggf. einem wasserlöslichen Celluloseäther sowie gegebenenfalls weiteren Zusätzen trocken vermischt oder vermahlt.

Falls vermahlen wird, kann man auch einen Teil der Komponenten erst nach dem Vermahlen zusetzen. Es ist auch möglich, zunächst nur einen Teil der Komponenten miteinander zu vermischen und den Rest, z.B. das Entstäubungsmittel erst zum Schluss zuzugeben.

Verwendung finden die erfindungsgemässen Farbstoffpräparate zur Herstellung nichtgelierender Färbebäder, Klotzflotten oder Druckpasten. Diese eignen sich zum Färben oder Bedrucken vor allem von Textilmaterial, z.B. solchem aus natürlichem und insbesondere synthetischem Polyamid.

Die folgenden Beispiele dienen zur Erläuterung der Erfindung. Teile bedeuten Gewichtsteile und Prozente Gewichtsprozente.

Beispiel 1

51,6 Teile des getrockneten Farbstoffpresskuchens, bestehend aus 14% NaCl und 86% Farbstoff der Formel

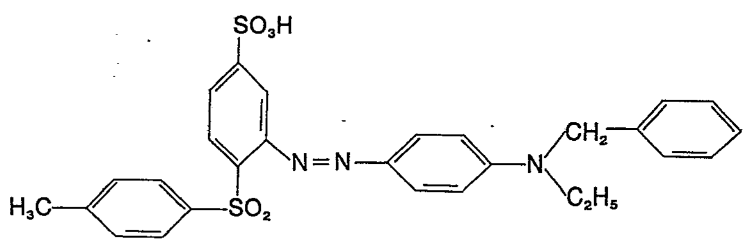

(I)

werden mit 20 Teilen Polyäthylenglykol (durchschnittliches Molekulargewicht ca. 9000), 25,2 Teilen Sulfitablauge-Pulver (Cellex), 2 Teilen Dodecylbenzolsulfonat und 0,2 Teilen Hydroxypropylmethylcellulose trocken vermischt. Anschliessend wird 1 Teil eines Entstäubungsmittels (Mineralöl in Verbindung mit Emulgatoren) zugesetzt.

Man erhält ein in Wasser gut lösliches festes Präparat, dessen wässrige Lösung nicht zum Gelieren neigt.

Beispiel 2

Zu 500 g einer 4%igen Johannisbrotkernmehl-Paste werden 10 g des gemäss Beispiel 1 hergestellten Farbstoffpräparates, gelöst in 100 g siedendem Wasser, 2 g Nonylphenoldiglykoläthersulfat und 388 g kaltes Wasser gegeben. Nach kräftigem Rühren wird der pH-Wert der Paste mit 33%iger Citronensäure auf 3,5 gestellt. Diese Druckpaste bleibt während 7 Tagen bei Raumtemperatur einwandfrei verwendbar, ohne zu Gelieren.

Beispiel 3

Arbeitet man wie im Beispiel 1 beschrieben, verwendet jedoch anstelle von 25,2 Teilen Sulfitablauge-Pulver die gleiche Menge Natriumsalz eines Naphthalinsulfosäure-Formaldehyd-Kondensationsproduktes und verwendet das erhaltene Farbstoffpräparat wie im Beispiel 2 beschrieben, so erhält man eine Druckpaste, welche auch nach 24-stündigem Stehen bei Raumtemperatur nicht geliert.

Beispiel 4

Arbeitet man wie im Beispiel 2 beschrieben, verwendet jedoch anstelle des gemäss Beispiel 1 hergestellten Farbstoffpräparates eines der folgenden Präparate, so gelieren die Druckpasten wesentlich früher, z.T. schon unmittelbar nach der Zubereitung.

a) Präparat gemäss Beispiel 1, jedoch ohne Polyäthylenglykol.
b) Präparat gemäss Beispiel 1, jedoch ohne Sulfitablauge-Pulver.

Beispiel 5

Arbeitet man wie im Beispiel 1 beschrieben, verwendet jedoch anstelle von Polyäthylenglykol mit einem Molekulargewicht von 9000 die gleiche Menge Polyäthylenglykol mit einem durchschnittlichen Molekulargewicht von ca. 8500 oder ca. 12 000, so erhält man in Wasser gut lösliche feste Präparate, deren wässrige Lösung nicht zum Gelieren neigt.

Beispiel 6

Arbeitet man wie im Beispiel 1 beschrieben, verzichtet jedoch auf den Zusatz von 0,2 Teilen Hydroxypropyl-Methylcellulose, und verwendet das erhaltene Farbstoffpräparat wie im Beispiel 2 beschrieben, so erhält man eine Druckpaste, welche auch nach 24-stündigem Stehen bei Raumtemperatur nicht geliert.

**Patentansprüche**

1. Farbstoffpräparate, enthaltend
a) 30–70 Gew.% eines Farbstoffes der Formel (I)

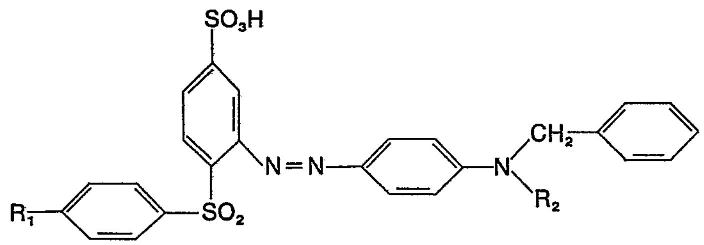

(I)

worin $R_1$ und $R_2$ unabhängig voneinander je einen Alkylrest mit 1–4 C-Atomen bedeuten.
b) 10–40 Gew.% Polyäthylenglykol,
c) 10–40 Gew.% eines Kondensationsprodukts von aromatischen Sulfonsäuren mit Formaldehyd und/oder eines Ligninsulfonats als anionisches Dispergiermittel, sowie gegebenenfalls
d) einen wasserlöslichen Celluloseäther und/oder
e) weitere Zusätze.

2. Farbstoffpräparate gemäss Anspruch 1, enthaltend
a) 30–70 Gew.% eines Farbstoffes der Formel (I),
b) 10–40 Gew.% Polyäthylenglykol,
c) 10–40 Gew.% eines Kondensationsprodukts von aromatischen Sulfonsäuren mit Formaldehyd und/oder eines Ligninsulfonats,
d) 0,05–2 Gew.% eines wasserlöslichen Celluloseäthers sowie gegebenenfalls
e) weitere Zusätze.

3. Präparate gemäss Ansprüchen 1 oder 2, dadurch gekennzeichnet, dass sie einen Farbstoff der angegebenen Formel enthalten, worin $R_1$ Methyl und $R_2$ Äthyl ist.

4. Präparate gemäss Ansprüchen 1 oder 2, dadurch gekennzeichnet, dass sie ein Polyäthylenglykol mit einem Molekulargewicht zwischen ca. 8000 und 12 000 enthalten.

5. Präparate gemäss Anspruch 4, dadurch gekennzeichnet, dass sie ein Polyäthylenglykol mit einem Molekulargewicht zwischen ca. 8500 und 10 500 enthalten.

6. Präparate gemäss Anspruch 1, dadurch gekennzeichnet, dass sie als anionisches Dispergiermittel ein Ligninsulfonat enthalten.

7. Präparate gemäss Anspruch 1, dadurch gekennzeichnet, dass sie als wasserlöslichen Celluloseäther Hydroxypropylcellulose oder vorzugsweise Hydroxypropyl-methylcellulose enthalten.

8. Präparate gemäss Anspruch 1, dadurch gekennzeichnet, dass sie als weitere Zusätze Coupagemittel, Netzmittel und/oder Entstäubungsmittel enthalten.

9. Feste Präparate gemäss Anspruch 1, dadurch gekennzeichnet, dass sie 40–60 Gew.% Farbstoff, 15–30 Gew.% Polyäthylenglykol, 15–35 Gew.% eines Kondensationsprodukts von aromatischen Sulfonsäuren mit Formaldehyd und/oder eines Ligninsulfonats, 0,1–1 Gew.% eines wasserlöslichen Celluloseäthers sowie gegebenenfalls weitere Zusätze enthalten.

10. Feste Präparate gemäss Anspruch 1, dadurch gekennzeichnet, dass sie 40–60 Gew.% eines Farbstoffes der Formel I, worin $R_1$ Methyl und $R_2$ Äthyl bedeutet, 15–30 Gew.% Polyäthylenglykol mit einem Molekulargewicht zwischen ca. 8500 und 10 500, 15–35 Gew.% Ligninsulfonat, 0,1–1 Gew.% Hydroxypropyl-Methyl-cellulose sowie Netz- und Entstäubungsmittel enthalten.

11. Verfahren zur Herstellung eines festen Farbstoffpräparates, dadurch gekennzeichnet, dass man einen Farbstoff der Formel I

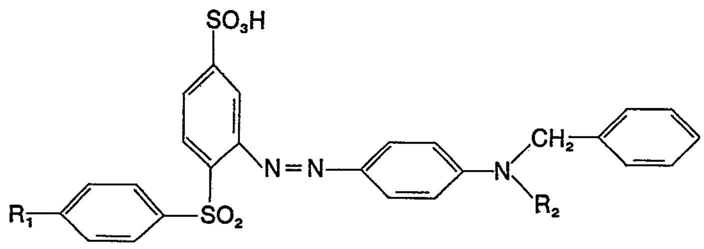

(I)

worin $R_1$ und $R_2$ unabhängig voneinander je einen Alkylrest mit 1–4 C-Atomen bedeutet, zusammen mit einem Polyäthylenglykol, einem Kondensationsprodukt von aromatischen Sulfonsäuren mit Formaldehyd und/oder einem Ligninsulfonat und gegebenenfalls einem wasserlöslichen Celluloseäther sowie gegebenenfalls weiteren Zusätzen trocken vermischt und vermahlt.

12. Verwendung nicht gelierender Färbebäder, Klotzflotten oder Druckpasten.

**Claims**

1. A dye preparation containing
a) 30–70 per cent by weight of a dye of the formula I

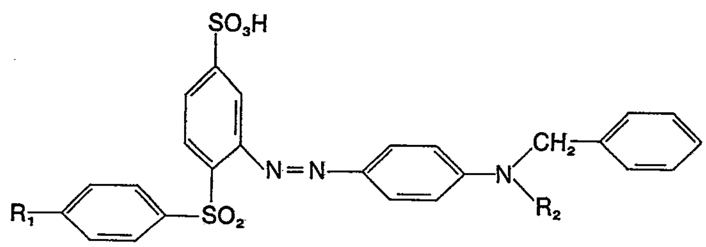

(I)

wherein $R_1$ and $R_2$ independently of one another are each an alkyl group having 1–4 C atoms,
b) 10–40 per cent by weight of polyethylene glycol,
c) 10–40 per cent by weight of a condensation product of aromatic sulfonic acids with formaldehyde and/or of a lignin sulfonate as anionic dispersing agent, and optionally
d) a water-soluble cellulose ether and/or
e) further additives.

2. A dye preparation according to Claim 1 containing
a) 30–70 per cent by weight of a dye of the formula (I),
b) 10–40 per cent by weight of polyethylene glycol,
c) 10–40 per cent by weight of a condensation product of aromatic sulfonic acids with formaldehyde and/or of a lignin sulfonate,
d) 0.05–2 per cent by weight of a water-soluble cellulose ether, and optionally
e) further additives.

3. A preparation according to either Claim 1 or 2, which contains a dye of the given formula wherein $R_1$ is methyl and $R_2$ is ethyl.

4. A preparation according to either Claim 1 or 2, which contains a polyethylene glycol having a molecular weight of between about 8000 and 12 000.

5. A preparation according to Claim 4, which contains a polyethylene glycol having a molecular weight of between about 8500 and 10 5000.

6. A preparation according to Claim 1, which contains a lignin sulfonate as the anionic dispersing agent.

7. A preparation according to Claim 1, which contains hydroxypropylcellulose or preferably hydroxypropylmethylcellulose as the water-soluble cellulose ether.

8. A preparation according to Claim 1, which contains diluting agents, wetting agents and/or anti-dust agents as further additives.

9. A solid preparation according to Claim 1, which contains 40–60 per cent by weight of dye, 15–30 per cent by weight of polyethylene glycol, 15–35 per cent by weight of a condensation product of aromatic sulfonic acids with formaldehyde and/or of a lignin sulfonate, 0.01–1 per cent by weight of a water-soluble cellulose ether, and optionally further additives.

10. A solid preparation according to Claim 1, which contains 40–60 per cent by weight of a dye

of the formula I wherein $R_1$ is methyl and $R_2$ is ethyl, 15–30 per cent by weight of polyethylene glycol having a mean molecular weight of between about 8500 and 10 500, 15–35 per cent by weight of lignin sulfonate, 0.1–1 per cent by weight of hydroxypropyl-methyl cellulose, and also wetting agents and anti-dust agents.

11. A process for producing a solid dye preparation by mixing or grinding in the dry state a dye of the formula I

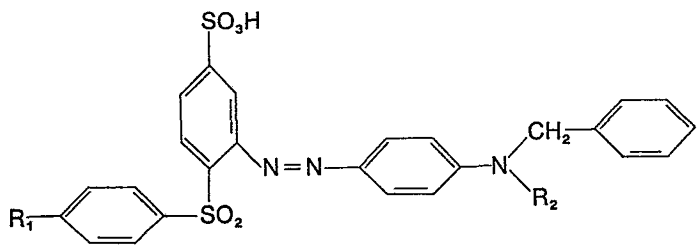

(I) ,

wherein $R_1$ and $R_2$ independently of one another are each an alkyl group having 1–4 C atom, together with a polyethylene glycol, a condensation product of aromatic sulfonic acids with formaldehyde and/or a lignin sulfonate, and optionally a water-soluble cellulose ether, as well as optionally further additives?

12. A method of producing non-gelling dye baths, padding liquors and printing pastes, which method comprises the use of a dye preparation according to Claim 1.

**Revendications**

1. Préparations tinctoriales contenant:

a) 30 à 70% en poids d'un colorant de formule (I)

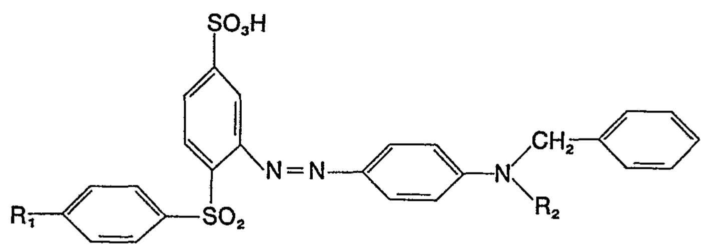

(I)

où $R_1$ et $R_2$ indépendamment l'un de l'autre représentent chacun un reste alkyle ayant 1 à 4 atomes de carbone.

b) 10 à 40% en poids de polyéthylèneglycol

c) 10 à 40% en poids d'un produit de condensation d'acides sulfoniques aromatiques avec le formaldéhyde et/ou d'un lignosulfonate comme dispersant anionique, ainsi qu'éventuellement

d) un éther cellulosique soluble dans l'eau et/ou

e) d'autres additifs.

2. Préparations tinctoriales selon la revendication 1, contenant:

a) 30 à 70% en poids d'un colorant de formule (I),

b) 10 à 40% en poids de polyéthylèneglycol

c) 10 à 40% en poids d'un produit de condensation d'acides sulfoniques aromatiques avec le formaldéhyde et/ou d'un lignosulfonate,

d) 0,05 à 2% en poids d'un éther cellulosique soluble dans l'eau ainsi qu'éventuellement

e) d'autres additifs.

3. Préparations selon les revendications 1 ou 2, caractérisées par le fait qu'elles contiennent un colorant de formule indiquée dans laquelle $R_1$ est un groupe méthyle et $R_2$ est un groupe éthyle.

4. Préparations selon les revendications 1 ou 2, caractérisées par le fait qu'elles contiennent un polyéthylèneglycol ayant un poids moléculaire compris entre environ 8000 et 12 000.

5. Préparations selon la revendication 4, caractérisées par le fait qu'elles contiennent un polyéthylèneglycol ayant un poids moléculaire compris entre environ 8500 et 10 5000.

6. Préparations selon la revendication 1, caractérisées par le fait qu'elles contiennent comme dispersants anionique un lignosulfonate.

7. Préparations selon la revendication 1, caractérisées par le fait qu'elles contiennent comme éther cellulosique soluble dans l'eau, de l'hydroxypropylcellulose ou, de préférence, de l'hydropropylméthylcellulose.

8. Préparations selon la revendication 1, caractérisées par le fait qu'elles contiennent comme additifs supplémentaires, des produits de coupage, des agents mouillants et/ou des produits anti-poussières.

9. Préparations solides selon la revendication 1, caractérisées par le fait qu'elle contiennent 40 à 60% en poids de colorant, 15 à 30% en poids de polyéthylèneglycol, 15 à 35% en poids d'un produit de condensation d'acides sulfoniques aromatiques avec le formaldéhyde et/ou d'un lignosulfonate, 0,1 à 1% en poids d'un éther cellulosique soluble dans l'eau ainsi qu'éventuellement d'autres additifs.

10. Préparations solides selon la revendication 1, caractérisées par le fait qu'elles contiennent 40 à 60% en poids d'un colorant de formule (I), où $R_1$ est un groupe méthyle et $R_2$ est un groupe éthyle, 15 à 30% en poids de polyéthylèneglycol ayant un poids moléculaire compris entre environ 8500 et 10 500, 15 à 35% en poids de lignosulfonate, 0,1 à 1% en poids d'hydroxypropylméthylcellulose ainsi que des agents mouillants et des produits anti-poussières.

11. Procédé pour la fabrication d'une préparation tinctoriale solide, caractérisé par le fait qu'on mélange et qu'on broie à sec un colorant de formule (I):

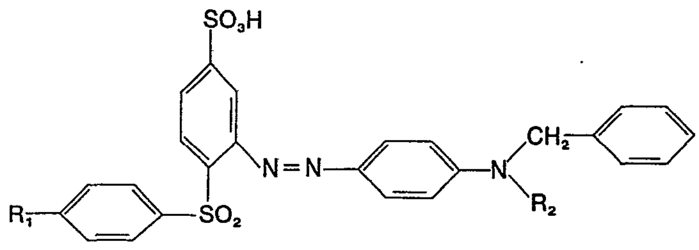

(I)

dans laquelle $R_1$ et $R_2$ indépendamment l'un de l'autre représentent chacun un reste alkyle ayant 1 à 4 atomes de carbone, simultanément avec un polyéthylèneglycol, un produit de condensation d'acides sulfoniques aromatiques avec le formaldéhyde et/ou un lignosulfonate et éventuellement un éther cellulosique soluble dans l'eau ainsi qu'éventuellement d'autres additifs.

12. Utilisation des préparations tinctoriales selon la revendication 1, pour préparer des bains tinctoriaux, des bains de foulardage ou des pâtes d'impression qui ne se gélifient pas.